# EUROPÄISCHE PATENTSCHRIFT

(11) **EP 2 783 081 B1**
(45) Veröffentlichungstag und Bekanntmachung des Hinweises auf die Patenterteilung: **14.09.2016**
(21) Anmeldenummer: 12732544.7
(22) Anmeldetag: 03.07.2012
(51) Int. Cl.: F01N 3/035, F01N 11/00, F01N 3/10, F02D 41/02, F02D 41/14

(54) **VERFAHREN ZUM PRÜFEN EINES PARTIKELFILTERS, INSBESONDERE FÜR ABGASE AUS EINEM OTTOMOTOR**
METHOD FOR TESTING A PARTICULATE FILTER, IN PARTICULAR FOR EXHAUST GASES FROM AN OTTO ENGINE
PROCÉDÉ DE CONTRÔLE D'UN FILTRE À PARTICULES, EN PARTICULIER POUR LES GAZ D'ÉCHAPPEMENT D'UN MOTEUR ESSENCE

(30) Priorität: 08.07.2011 DE 102011106933
(43) Veröffentlichungstag der Anmeldung: 01.10.2014
(73) Patentinhaber: Audi AG, 85045 Ingolstadt (DE)
(72) Erfinder: ODENDALL, Bodo, 85101 Lenting (DE)
(86) Internationale Anmeldenummer: PCT/EP2012/002787
(87) Internationale Veröffentlichungsnummer: WO 2013/007355

(56) Entgegenhaltungen:
- DE-A1-102008 027 575
- DE-A1-102009 000 410

## Beschreibung

Die Erfindung betrifft ein Verfahren zum Prüfen eines Partikelfilters, wobei es sich insbesondere um einen für die Abgase aus einem Ottomotor geeigneten Partikelfilter halten soll.

Typischerweise wird ein solcher Partikelfilter mit dem herkömmlichen Drei-Wege-Katalysator zusammengefasst, nämlich zu einem so genannten Vier-Wege-Katalysator.

Der herkömmliche Drei-Wege-Katalysator umfasst eine Vielzahl von Kanälen, die üblicherweise mehr oder weniger geradlinig verlaufen. An Wänden, durch die die Kanäle gebildet sind, sind Edelmetalle aufgebracht, die für die katalytische Funktion sorgen.

Ein Vier-Wege-Katalysator unterscheidet sich von diesem Drei-Wege-Katalysator dadurch, dass die Kanäle an einem Ende verschlossen sind, und zwar jeweils im Wechsel vorne und hinten. Die Kanalwände werden durchlässig ausgebildet, mit Poren, wobei wie bei einem Kaffeefilter die Partikel in den Poren abgeschieden werden können.

Das Abgas strömt nun in diejenigen Kanäle, die vorne offen sind und hinten geschlossen sind. Da das Abgas durch die Kanäle hinten nicht entweichen kann, wird es durch die Poren gedrängt, in die benachbarten Kanäle hinein, welche vorne geschlossen und hinten offen sind.

In Kraftwägen ist es üblich, für die Zusammensetzung des Abgases wesentliche Funktionen regelmäßig zu überwachen. Somit ist auch für den Partikelfilter die Möglichkeit zur Diagnose wünschenswert, inwieweit der Filter funktionsfähig ist.

Der Partikel-Abscheidegrad lässt sich nun aber nur schwer messen. Bisher behilft man sich damit, den Abgasgegendruck in der Abgasleitung zu messen, um eine Aussage über die Funktionsfähigkeit des Partikelfilters machen zu können. Diese Aussagen sind jedoch nicht präzise genug.

Die DE 10 2008 027 575 A1 betrifft ein Diagnoseverfahren für ein katalytisch wirksames Abgasreinigungselement, dem Abgas eines Kraftfahrzeug-Verbrennungsmotors zugeführt wird. Bei dem Verfahren wird eine als Reaktion auf einen sprungartig durchgeführten Mager-Fett-Wechsel und/oder Fett-Mager-Wechsel des Motorbetriebs auftretende Sprungantwort des Abgasreinigungselements in Form eines Signals eines stromab des Abgasreinigungselements angeordneten Abgassensors in Bezug auf eine Alterung des Abgasreinigungselements ausgewertet.

Aus der DE 2009 000 410 A1 geht ein Verfahren zur Diagnose einer in einem Abgasbereich einer Brennkraftmaschine anordenbaren oder angeordneten Abgasbehandlungseinrichtung hervor. Dabei weist die Abgasbehandlungseinrichtung mindestens einen mit Abgas durchströmbaren, als Katalysator und als Filtereinrichtung wirksamen Durchströmungsbereich auf. Zur Diagnose des Katalysators wird die katalytische Wirkung der Abgasbehandlungseinrichtung geprüft. Zur Diagnose der Filtereinrichtung wird das Ergebnis der Diagnose des Katalysators verwendet.

Es ist die Aufgabe der vorliegenden Erfindung, ein Verfahren zum Prüfen eines Partikelfilters auf Funktionsfähigkeit bereitzustellen, der in einen Vier-Wege-Katalysator integriert ist, wobei das bereitzustellende Verfahren möglichst präzise sein soll.

Die Aufgabe wird durch ein Verfahren mit den Merkmalen gemäß Patentanspruch 1 gelöst.

Erfindungsgemäß wird somit die katalytische Funktion der Beschichtung auf bzw. in den Wänden des Partikelfilters geprüft und von dieser katalytischen Funktion wird auf die Funktionsfähigkeit zum Abscheiden von Partikeln geschlossen.

Die Erfindung beruht auf der Erkenntnis, dass eine unzureichende Funktionsfähigkeit des Partikelfilters zum Abscheiden von Partikeln vor allem durch mechanische Beschädigungen ausgelöst wird, sei dies ein Riss im Substrat der Wand, sei dies ein Loch im Substrat der Wand. Die mechanischen Beschädigungen bewirken, dass das Abgas über eine Art von Bypass ungehindert durch den Partikelfilter strömen kann, sodass keine Partikel abgeschieden werden. Die mit der Beschichtung versehene Kanalwand kann daher im Bereich der mechanischen Beschädigung auch nicht ihre katalytische Funktion erfüllen. Somit ist eine Überprüfung auf die katalytische Funktion geeignet, um auf die Funktionsfähigkeit zum Abscheiden von Partikeln schließen zu können.

Erfindungsgemäß wird der Partikelfilter mit Abgas beaufschlagt, dessen Zusammensetzung sprunghaft (jeweils in einem Sprung) von Fett nach Mager und/oder umgekehrt wechselt bzw. gewechselt wird. Das Luft-Kraftstoff-Verhältnis (Lambda) in dem den Partikelfilter verlassenden Abgas wird nun gemessen - hier steht typischerweise eine Nachkatlambdasonde ohnehin zur Verfügung -, und das Ausmaß einer Abweichung des Luft-Kraftstoff-Verhältnisses von Eins während eines Zeitpunkts nach dem Sprung bzw. während einer vorbestimmten Zeitdauer nach dem Sprung bestimmt, ob der Partikelfilter als funktionsfähig angesehen wird. Die Erfindung beruht auf dem Wissen, dass ein Wechsel in der Zusammensetzung des Abgases von Fett nach Mager zunächst durch den Katalysator abgepuffert wird, so dass für eine vorbestimmte Zeitdauer nach dem Wechsel bei voll funktionsfähigem Katalysator (und damit auch Partikelfilter) das Luft-Kraftstoff-Verhältnis genau Eins beträgt. Bei einem beschädigten Partikelfilter gibt es den Bypass, so dass ein Teil des Abgases ungehindert durch den Filter strömen kann. Dieses Abgas, das ungehindert den Filter durchlaufen hat, bewirkt eine Abweichung im Luft-Kraftstoff-Verhältnis von Eins.

In vorteilhafter Weise wird aus dem Ausmaß der Abweichung des Luft-Kraftstoff-Verhältnisses von Eins zu dem Zeitpunkt oder während der Zeitdauer nach dem Sprung, indem sich hinter dem Katalysator das Luft-Kraftstoff-Verhältnis noch in abgepufferter Form zeigt, bestimmt, ob der Partikelfilter als funktionsfähig angesehen wird.

Bevorzugt wird diese Abweichung sogar dazu verwendet, das Ausmaß einer Beschädigung des Partikelfeldes zu quantifizieren. Der Erfinder der vorliegend beanspruchten Idee hat erkannt, dass hier einfache lineare Zusammenhänge bestehen.

Nachfolgend wird eine bevorzugte Ausführungsform der Erfindung unter Bezug auf die Zeichnung näher beschrieben, in der
- Fig. 1: eine Anordnung zeigt, bei der ein Einsatz des erfindungsgemäßen Verfahrens erfolgt,
- Fig. 2: schematisch den Aufbau eines Vier-Wege-Katalysators im Schnitt mit dem zugehörigen Abgasstrom veranschaulicht und
- Fig. 3A: das Luft-Kraftstoff-Verhältnis veranschaulicht, mit dem der Partikelfilter bei dem erfindungsgemäßen Verfahren beaufschlagt wird, sowie
- Fig. 3B: das Luft-Kraftstoff-Verhältnis veranschaulicht, wie es in Strömungsrichtung des Abgases hinter dem Filter einerseits bei unbeschädigtem Partikelfilter und andererseits bei beschädigtem Partikelfilter aussieht.

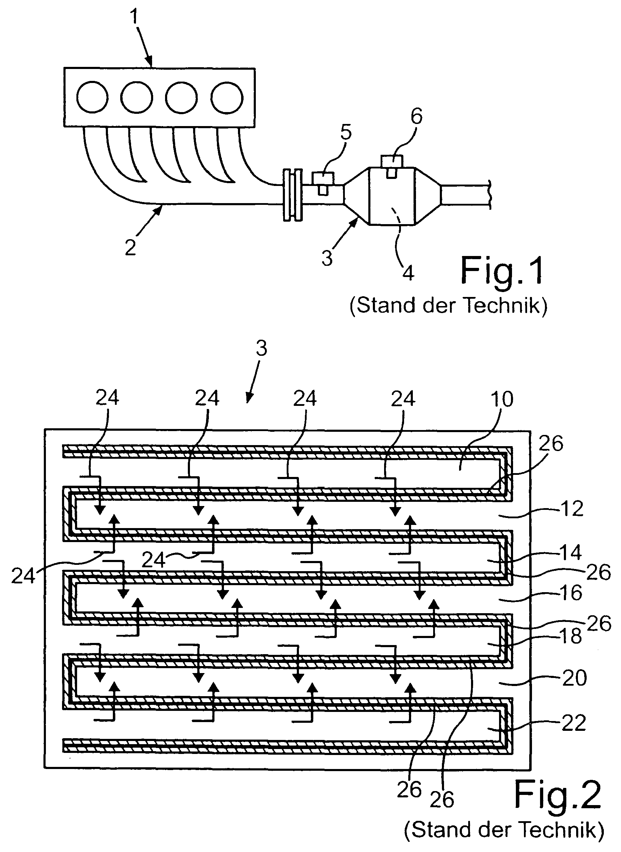

Fig. 1 zeigt eine schematische Darstellung einer Brennkraftmaschine 1, die vorliegend ein Ottomotor sein soll, mit einem Abgasstrang 2. Der Abgasstrang 2 umfasst einen Abgaskatalysator 3, der als Vier-Wege-Katalysator ausgebildet ist sowie einen integrierten Sauerstoffspeicher 4 beinhaltet. Der Abgasstrang 2 umfasst ferner eine stromauf des Abgaskatalysators 3 angeordnete Lambdasonde 5, die als Führungssonde dient, sowie eine dem Abgaskatalysator 3 zugeordnete Lambdasonde 6, die als Regelsonde dient.

Die Lambdasonde 6 ist im vorliegenden Ausführungsbeispiel stromab des Abgaskatalysators 3 angeordnet. Genauso gut könnte diese Lambdasonde jedoch auch direkt im Abgaskatalysator 3, d. h. nach einem Teilvolumen oder Teilabschnitt des Sauerstoffspeichers 4, angeordnet sein.

Der Vier-Wege-Katalysator ist schematisch im Schnitt in Fig. 2 veranschaulicht: Er umfasst eine Mehrzahl von Kanälen 10, 12, 14, 16, 18, 20, 22, von denen jeder zweite Kanal 10, 14, 18, 22 zur Vorderseite, also zur Seite des Abgasstrangs 2 hin, offen ist, wohingegen der andere Teil der Kanäle 12, 16, 20 zur stromabwärts gelegenen Seite hin offen ist. Naturgemäß kann das Abgas nur in die nach vorne hin offenen Kanäle 10, 14, 18, 22 eintreten. Da es diese aber wegen ihres Verschlusses am Ende nicht verlassen kann, wird das Abgas gemäß den Pfeilen 24 in die jeweils benachbarten, nach hinten offenen Kanäle 12, 16, 20, gedrückt bzw. gedrängt. Dass das Abgas von einem Kanal, beispielsweise Kanal 10, in einen benachbarten Kanal, im Beispiel den Kanal 12, gelangen kann, wird dadurch ermöglicht, dass die Kanalwände, d. h. dass die die einzelnen Kanäle bildenden und abtrennenden Wände 26 aus einem porösen Substrat gebildet sind, wobei durch die Poren Abgas hindurchgelangen kann. Im Bereich der Poren bzw. in und an den Wänden 26 ist ferner eine katalytische Beschichtung vorgesehen, die die Funktion des herkömmlichen Drei-Wege-Katalysators bereitstellt. Wird nun eine der Wände 26 beschädigt, so kann das Abgas ungehindert hindurchströmen, d. h., ohne dass Partikel abgeschieden werden würden oder auch eine katalytische Umsetzung des Abgases erfolgt.

Zum Zwecke der Prüfung des Vier-Wege-Katalysators 3 auf Funktionsfähigkeit und damit des dahin enthaltenen Partikelfilters wird dieser, wie durch Führung anhand der Lambdasonde 5 ermöglicht, wechselnd mit fettem und magerem Abgas beaufschlagt.

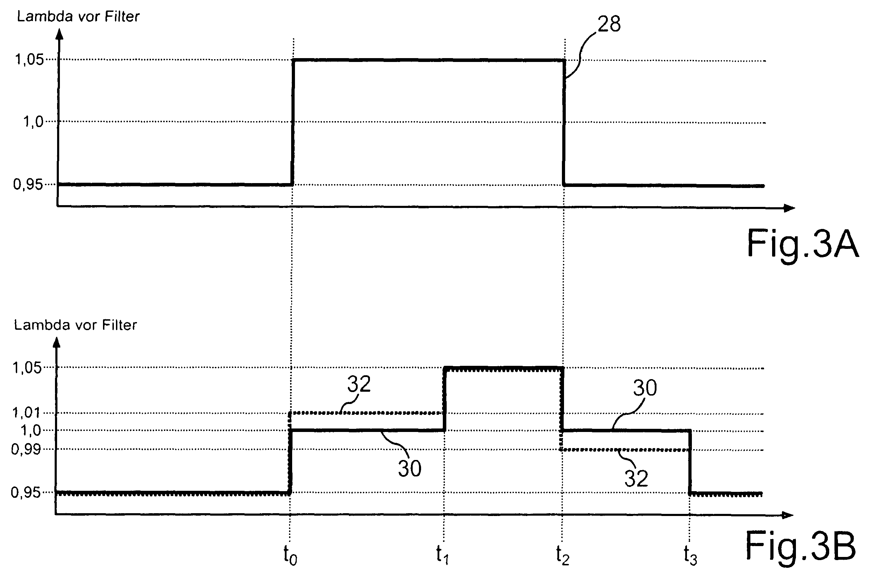

Fig. 3A zeigt die von der Lambdasonde 5 gemessene Kurve 28 bei einem solchen Beaufschlagen.

Fig. 3B zeigt, welche Messwerte die Lambdasonde 6 dann misst:
Eine Kurve 30 zeigt, dass bei einem unbeschädigten Partikelfilter und damit unbeschädigten Vier-Wege-Katalysator 3 ein Sprung zum Zeitpunkt t₀ von Fett nach Mager, der durch die Lambdasonde 5 gemäß der Kurve 28 unmittelbar gemessen wird, sich hinter dem Katalysator 3 in abgepufferter Form zeigt, indem sich nämlich zwischen dem Zeitpunkt t₀ und t₁ der Wert Lambda gleich Eins einstellt. Erst ab dem Zeitpunkt t₁ ist der Effekt der Pufferung erschöpft, und der Wert von Lambda hinter dem Katalysator 3 springt auf denselben Wert wie bei der Kurve 28. Findet dann zum Zeitpunkt t₂ abermals ein Wechsel von Mager nach Fett statt, wird dies wieder durch den Drei-Wege-Katalysator abgepuffert, und zwar bis zum Zeitpunkt t₃, und ab dem Zeitpunkt t₃ stellt sich dann wieder das Luft-Kraftstoff-Verhältnis Lambda gemäß der Kurve 28 ein.

Ist nun der Partikelfilter beschädigt, beispielsweise in 20 % seines Bereichs, dann gelangt ein Fünftel des Abgases ungehindert zur Lambdasonde 6. Bei einem Wert von Lambda gemäß der Kurve 28 von 1,05 zwischen dem Zeitpunkt t₀ und t₁ "zieht" dieses ungehindert durch den Partikelfilter hindurchgelangendes Abgas den Wert des Luft-Kraftstoff-Verhältnisses hinter dem Filter auf 1,01 (da 1,01 - 1 = 0,01 genau 1/5 von 1,05 - 1 = 0,05 beträgt).

In Umkehrung dieses Effekts zeigt sich bei dem beschädigten Partikelfilter gemäß der Kurve 32 genau, dass das fette Abgas, das gemäß der Kurve 28 ein Luft-Kraftstoff-Verhältnis von 0,95 aufweist, zu einem Fünftel hindurchgelangt, darin, dass die Lambdasonde 6 ein Luft-Kraftstoff-Verhältnis Lambda von 0,99 misst.

Die genannten Zahlenwerte sind deswegen linear anzusetzen, weil die Abweichung von Eins nur klein ist. Genauere Rechnungen wären selbstverständlich möglich.

Durch die Erfindung wird es somit möglich, durch Messung des Luft-Kraftstoff-Verhältnisses hinter dem Abgaskatalysator 3, der als Vier-Wege-Katalysator ausgebildet ist, bei zumindest einmaliger Herstellung eines Wechsels zwischen Fett und Mager oder Mager und Fett zu erkennen, inwieweit der Partikelfilter, der zum Vier-Wege-Katalysator 3 gehört, voll funktionsfähig ist oder nur eingeschränkt funktionsfähig ist.

Das erfindungsgemäße Verfahren wird durch eine die Abgaszusammensetzung einstellende Steuereinrichtung, die in den Figuren nicht gezeigt ist, gesteuert, und durch diese erfolgt sogleich die On-Board-Diagnose des Partikelfilters, der zum Vier-Wege-Katalysator 3 gehört.

Die Fähigkeit zur Abscheidung von Partikeln wird also somit insbesondere an der mit den porösen Wänden zur Abscheidung der Partikel zur Verfügung gestellten katalytischen Funktion erkannt bzw. festgemacht.

## Patentansprüche

1. Verfahren zum Prüfen eines Partikelfilters (3) auf Funktionsfähigkeit, der eine Vielzahl von Kanalwänden (26) mit Poren aufweist, durch die aus einer Verbrennungskraftmaschine (1) stammendes Abgas gedrängt wird, damit sich Partikel aus dem Abgas in den Poren der Kanalwände (26) abscheiden, wobei durch eine Beschichtung der Kanalwände die Funktion eines Drei-Wege-Katalysators (3), insbesondere mit Sauerstoffspeicher (4), bereitgestellt ist, wobei die katalytische Funktion der Beschichtung geprüft wird und von dieser auf die Funktionsfähigkeit zum Abscheiden von Partikeln geschlossen wird, indem der Partikelfilter mit Abgas beaufschlagt wird, dass dessen Zusammensetzung in einem Sprung von Fett nach Mager und/oder umgekehrt gewechselt wird, wobei das Luft-Kraftstoff-Mischverhältnis in dem den Partikelfilter verlassenden Abgas gemessen wird,
**dadurch gekennzeichnet, dass**
das Ausmaß einer Abweichung des Luft-Kraftstoff-Verhältnisses von Eins zu einem Zeitpunkt oder während einer Zeitdauer nach einem Sprung bestimmt, ob der Partikelfilter als funktionsfähig angesehen wird.

2. Verfahren nach Anspruch 1,
**dadurch gekennzeichnet, dass**
das Ausmaß der Abweichung des Luft-Kraftstoff-Verhältnisses von Eins zu dem Zeitpunkt oder während der Zeitdauer nach dem Sprung, indem sich hinter dem Katalysator (3) das Luft-Kraftstoff-Verhältnis noch in abgepufferter Form zeigt, bestimmt, ob der Partikelfilter als funktionsfähig angesehen wird.

3. Verfahren nach Anspruch 1,
**dadurch gekennzeichnet, dass**
aus dem Ausmaß der Abweichung des Luft-Kraftstoff-Verhältnisses von Eins zu einem Zeitpunkt oder während einer Zeitdauer nach einem Sprung auf das Ausmaß einer Beschädigung des Partikelfilters (3) geschlossen wird.

4. Kraftfahrzeug mit einer Steuereinrichtung, die zur Ausführung des Verfahrens nach einem der Ansprüche 1 bis 3 ausgelegt ist.

## Claims

1. Method for testing the functioning of a particle filter (3), the particle filter comprising a plurality of duct walls (26) with pores, through which exhaust gas from a combustion engine (1) is pushed in order for particles from the exhaust gas to deposit in the pores of the duct walls (26), wherein the function of a three-way catalytic converter (3), in particular with an oxygen storage tank (4), is provided by a coating of the duct walls, wherein the catalytic function of the coating is examined and the functioning for the deposit of particles is determined therefrom, whereby the particle filter is subjected to exhaust gas such that its composition is changed, in one step, from rich to lean, or vice-versa, wherein the air-fuel mixing ratio in the exhaust gas leaving the particle filter is measured,
**characterized in that**
the extent of a deviation of the air-fuel ratio from one at a particular time or during a period of time after the step determines whether or not the particle filter is considered as functioning.

2. Method according to claim 1,
**characterized in that**
the extent of the deviation of the air-fuel ratio from 1 at the particular time or during the period of time after the step, during which the air-fuel ratio upstream of the catalytic converter (3) is still in buffered form, determines whether or not the particle filter is considered as functioning.

3. Method according to claim 1,
**characterized in that**
the extent of a damage of the particle filter (3) is determined from the extent of the deviation of the air-fuel ratio from 1 at a particular time or during the period of time after the step.

4. Motor vehicle with a control device that is configured to carry out the method according to any of claims 1 to 3.

## Revendications

1. Procédé destiné à tester un filtre à particules (3) quant à son bon fonctionnement, qui présente une pluralité de parois de canalisation (26) avec des pores à travers lesquels sont refoulés des gaz d'échappement provenant d'une machine à combustion interne (1), de sorte que les particules du gaz d'échappement se séparent dans les pores des parois de canalisation (26), dans lequel, par revêtement des parois de canalisation, on assure le fonctionnement d'un catalyseur à trois voies (3), en particulier avec un accumulateur d'hydrogène (4), dans lequel le fonctionnement catalytique du revêtement est testé et on en tire une conclusion sur le bon fonctionnement pour séparer les particules et on alimente le filtre à particules en gaz d'échappement de sorte que sa composition soit modifiée dans un saut de riche à pauvre et/ou vice-versa, dans lequel le rapport de mélange air-carburant est mesuré dans le gaz d'échappement quittant le filtre à particules,
**caractérisé en ce que** :
le degré d'écart du rapport air-carburant à un à un moment ou pendant une période de temps après un saut détermine si le filtre à particules est considéré comme opérationnel.

2. Procédé selon la revendication 1,
**caractérisé en ce que** :
le degré d'écart du rapport air-carburant à un au moment ou pendant la période de temps après le saut alors que le rapport air-carburant se présente encore, après le catalyseur (3), sous forme tamponnée, détermine si le filtre à particules est considéré comme opérationnel.

3. Procédé selon la revendication 1,
**caractérisé en ce que** :
du degré d'écart du rapport air-carburant à un à un moment ou pendant une période de temps après un saut, on en conclut au degré d'un endommagement du filtre à particules (3).

4. Véhicule automobile avec un dispositif de commande qui est conçu pour réaliser le procédé selon l'une quelconque des revendications 1 à 3.
